(19) Europäisches Patentamt
European Patent Office
Office européen des brevets

(11) **EP 2 413 633 A1**

(12) **EUROPEAN PATENT APPLICATION**
published in accordance with Art. 153(4) EPC

(43) Date of publication:
**01.02.2012 Bulletin 2012/05**

(51) Int Cl.:
**H04W 36/32** *(2009.01)*　　**H04W 36/38** *(2009.01)*

(21) Application number: **09842205.8**

(22) Date of filing: **24.03.2009**

(86) International application number:
**PCT/JP2009/055788**

(87) International publication number:
**WO 2010/109591 (30.09.2010 Gazette 2010/39)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Fujitsu Limited
Kawasaki-shi, Kanagawa 211-8588 (JP)**

(72) Inventor: **UNNO, Masataka
Kawasaki-shi
Kanagawa 211-8588 (JP)**

(74) Representative: **Stebbing, Timothy Charles
Haseltine Lake LLP
Lincoln House, 5th Floor
300 High Holborn
London WC1V 7JH (GB)**

(54) **BASE STATION APPARATUS, MOBILE TERMINAL, COMMUNICATION SYSTEM AND COMMUNICATION SYSTEM CONTROL METHOD**

(57) A base station device and a communication system are provided. This base station device is a base station device 30 that performs communication with a mobile terminal 10, and includes: a handover operation part 65 that performs a handover of the mobile terminal 10, based on an instruction from a base station control device 50; and a control part 38 that issues a request for the handover of the mobile terminal 10, based on the moving speed and moving direction of the mobile terminal 10, the request being issued to the base station control device 50. With the base station device and the communication system, handovers can be properly performed.

FIG. 9

EP 2 413 633 A1

**Description**

The present invention relates to a base station device, a mobile terminal, a communication system, and a method of controlling the communication system.

BACKGROUND

In recent years, mobile communication systems in which mobile terminals such as portable telephone devices perform radio communication with base station devices have been used. Each base station has a communication area in which the base station can perform communication. When a mobile terminal moves from the communication area of the base station currently communicating with the mobile terminal to the communication area of another base station, a handover from the base station currently communicating with the mobile terminal to the other base station is performed. Where two or more sectors exist in the communication area of each base station, a handover between sectors may be performed within the same base station. Where two or more carriers of different frequencies are set, a handover between frequencies may be performed.

A handover is performed by a mobile terminal measuring the received powers of common channels of base stations or sectors and comparing the received powers. Patent Documents 1 and 2 each disclose the use of the moving speed of each mobile terminal to control handovers.

Patent Document 1: Japanese Laid-Open Patent Publication No. 2005-223753
Patent Document 2: Japanese Laid-Open Patent Publication No. 2005-311626

DISCLOSURE OF THE INVENTION

PROBLEMS TO BE SOLVED BY THE INVENTION

However, handovers might not be properly performed, if only the moving speed of each mobile terminal is used to control handovers.
According to an aspect of the present invention, a base station device, a mobile terminal, a communication system, and a method of controlling the communication system aim to perform handovers properly.

MEANS FOR SOLVING THE PROBLEMS

For example, a base station device that performs communication with a mobile terminal, the base station device including: a handover operation part configured to perform a handover of the mobile terminal, based on an instruction from a base station control device; and a control part configured to issue a request for the handover of the mobile terminal, based on a moving speed and a moving direction of the mobile terminal, the request being issued to the base station control device is utilized.

In addition, for example, a communication system including: a mobile terminal; a base station device configured to perform communication with the mobile terminal; and a base station control device configured to instruct the base station device to perform a handover of the mobile terminal, the base station device including a control part configured to issue a request for the handover of the mobile terminal, based on a moving speed and a moving direction of the mobile terminal, the request being issued to the base station control device is utilized.

In addition, for example, a mobile terminal that performs communication with a base station device, the mobile terminal including a handover operation part configured to perform a handover in accordance with an instruction based on a moving speed and a moving direction of the mobile terminal, the instruction being issued from a base station control device is utilized.

In addition, for example, a method of controlling a communication system that includes a mobile terminal, a base station device performing communication with the mobile terminal, and a base station control device configured to instruct the base station device to perform a handover of the mobile terminal, the method characterized by including issuing a request for the handover of the mobile terminal, based on a moving speed and a moving direction of the mobile terminal, the request being issued to the base station control device is utilized.

EFFECTS OF THE INVENTION

With the base station device, the mobile terminal, the communication system, and the method of controlling the communication system, handovers can be properly performed.

BRIEF DESCRIPTION OF DRAWINGS

FIG. 1 is a diagram showing a communication system according to an embodiment 1;
FIG. 2 shows the relationships between communication sectors and carriers;
FIG. 3 is a diagram showing arrangement of base stations;
FIG. 4 is a diagram showing the respective base stations and sectors existing along a path L1;
FIG. 5 is a sequence chart showing an example process of an in-station handover;
FIG. 6 is a sequence chart showing an example process of an inter-station handover;
FIG. 7 is a sequence chart showing an example process of an inter-frequency handover;
FIG. 8 is a block diagram of a mobile terminal of the embodiment 1;
FIG. 9 is a block diagram of a base station device of the embodiment 1;
FIG. 10 is a block diagram of a base station control device of the embodiment 1;
FIG. 11 is a flowchart showing an operation of the mobile terminal in the embodiment 1;
FIG. 12 is a flowchart showing an operation to be performed when a base station device is set in the embodiment 1;
FIG. 13 is a flowchart showing an operation of the base station device in the embodiment 1;
FIG. 14 is a flowchart showing an operation of the base station control device in the embodiment 1;
FIG. 15 is a block diagram of a mobile terminal of an embodiment 2;
FIG. 16 is a block diagram of a base station device of the embodiment 2;
FIG. 17 is a flowchart showing an operation of the mobile terminal in the embodiment 2;
FIG. 18 is a flowchart showing an operation to be performed when the base station device is set in the embodiment 2;
FIG. 19 is a flowchart showing an operation of the base station device in the embodiment 2;
FIG. 20 is a block diagram of a base station device of an embodiment 3;
FIG. 21 is a flowchart showing an operation to be performed when the base station device is set in the embodiment 3; and
FIG. 22 is a flowchart showing an operation of the base station device in the embodiment 3.

DESCRIPTION OF EMBODIMENTS

The following is a description of embodiments, with reference to the accompanying drawings.

EMBODIMENT 1

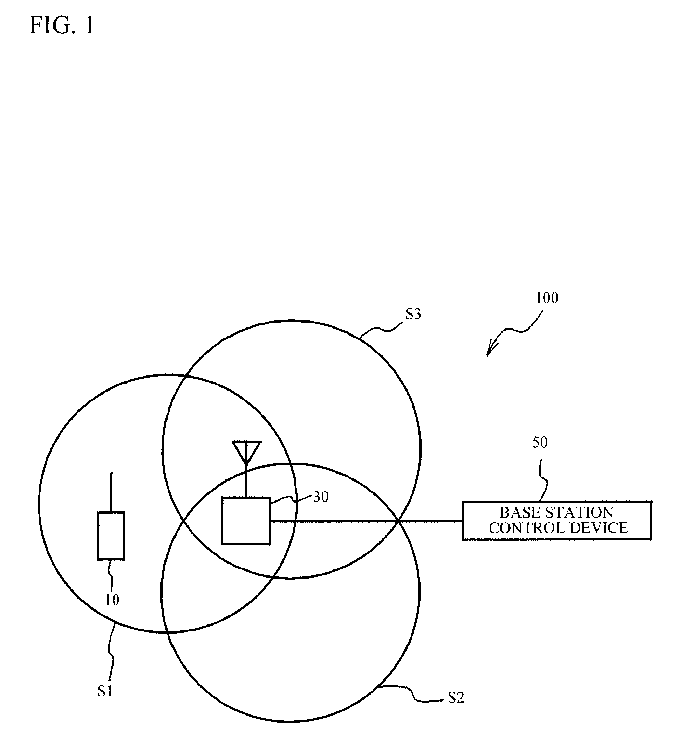

FIG. 1 is a diagram showing an example of a communication system in which an embodiment 1 is used. As shown in FIG. 1, a communication system 100 includes a mobile terminal 10, a base station device 30, and a base station control device 50. The mobile terminal 10 and the base station device 30 perform radio communications with each other. The base station control device 50 controls more than one base station device 30. If a base station device 30 uses a directional antenna, for example, the communication area of the base station device 30 is divided into sectors S1 through S3.

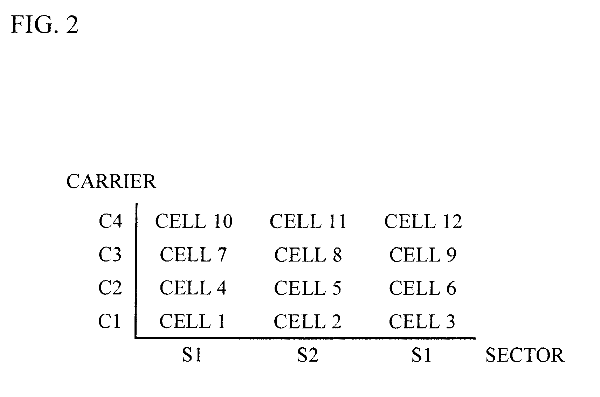

FIG. 2 shows the relationship between communication sectors and carriers. As shown in FIG. 2, in each of the sectors S1 through S3, carriers C1 through C4 with different communication frequency bands are set. A cell is set for each carrier in each sector. In the example of the communication area of a base station device 30 shown in FIG. 2, cells 1 through 12 are set. When the mobile terminal 10 communicates with the base station device 30, the mobile terminal 10 belongs to one of the cells 1 through 12.

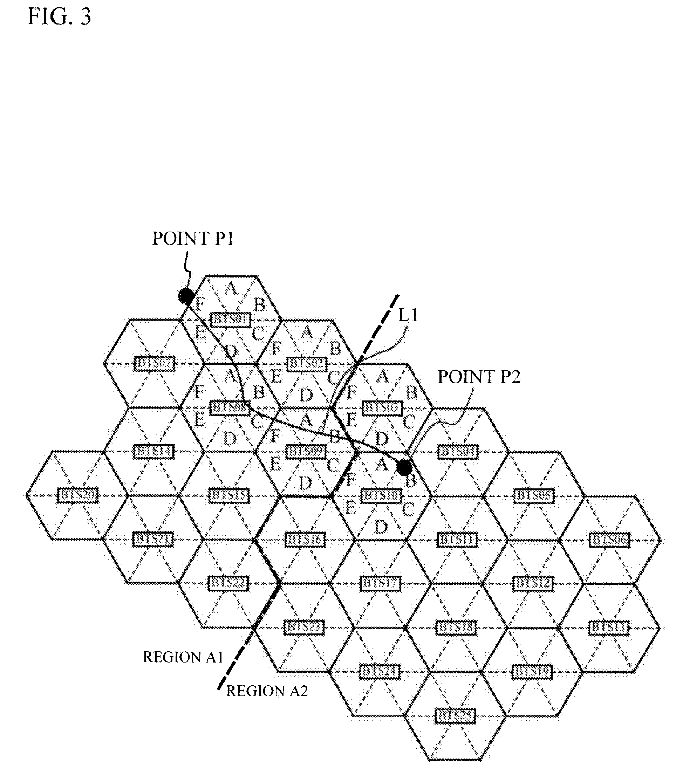

FIG. 3 is a diagram showing arrangement of base stations. As shown in FIG. 3, base stations BTS01 through BTS25 are arranged. The communication area of each of the base stations BTS01 through BTS25 is divided into six sectors A through F. In a region A 1 on the upper left side of the broken line, the carriers C1 through C4 are set in the base stations. In a region A2 on the lower right side of the broken line, the carriers C1 through C3 are set in the base stations, but the carrier C4 is not set. For example, a service of 384 kbps in maximum uplink speed (Rel. 5 of the 3GPP (Third Generation Partnership Project) specification) is provided through the carriers C1 through C3. The same service is provided through different carriers, to increase the bandwidth.

When a new service is test-launched, one of the carriers may be used for the new service. For example, a service of 5.7 Mbps in maximum uplink speed (Rel. 6 of the 3GPP specification, for example) is provided through the carrier C4. If a service of Rel. 6 is test-launched in a region in which a service of Rel. 5 is provided in this manner, the region A1 in which the Rel. 6 service is provided might be located adjacent to the region A2 in which the Rel. 6 service is not provided, as shown in FIG. 3.

A case where the mobile terminal 10 moves from a point P 1 to a point P2 along a path L1 in FIG. 3 is described.

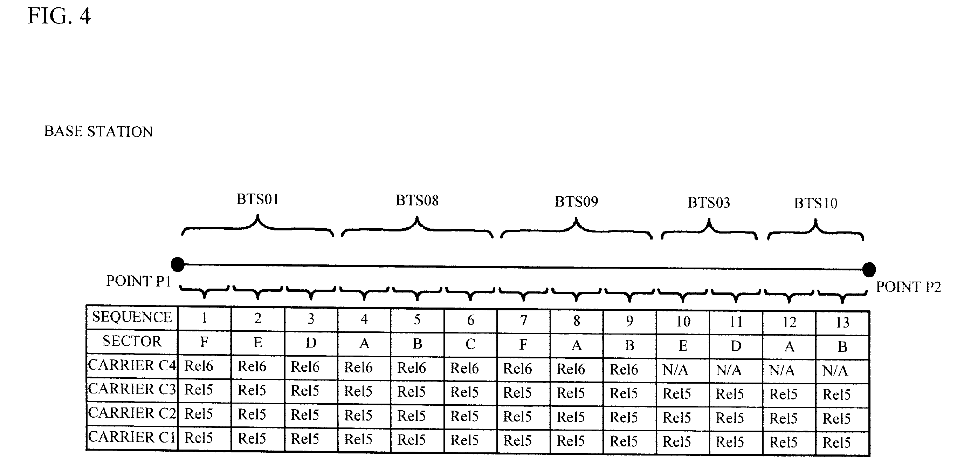

FIG. 4 is a diagram showing the respective base stations and the respective sectors existing along the path L1. The mobile terminal 10 moves from the sector F of the base station BITS01 to the sector B of the base station BTS10. The sector F of the base station BTS01 to the sector B of the base station BTS09 are included in the region A1. In the region A1, Rel. 5 is set in the carriers C1 through C3, and Rel. 6 is set in the carrier C4. The sector E of the base station BTS03 to the sector B of the base station BTS10 are included in the region A2. In the region A2, Rel. 5 is set in the carrier C1 through C3, and the carrier C4 is not used.

The sector B of the base station BTS09 is the sector at the end of the service provided through the carrier C4 (the end of the carrier). Therefore, a cell such as the carrier C4 in the sector B of the base station BTS09 is called a carrier-end cell. When a mobile terminal moves along the path L1, a handover to another carrier (at a different frequency) is performed at the carrier-end. Meanwhile, the other cells are not located at carrier-ends. Those cells are called non-carrier-end cells. When a mobile terminal moves along the path L1, a handover between carriers is not performed at any non-carrier-end.

Table 1 shows the services at the respective cells, whether each cell is a carrier-end cell or a non-carrier-end cell, and the type of each handover performed when a cell is switched from a previous cell. In each code "BTSxx-yy-z" representing a cell, xx is the base station number, yy is the sector code, and z is the carrier number. The column of service shows whether each provided service is Rel. 5 or Rel. 6. The column of handover shows whether each handover is a handover between sectors within a base station (an in-station handover), or whether each handover is a handover between base stations (an inter-station handover), or whether each handover is a handover between different frequencies (an inter-frequency handover).

[Table 1]

| SEQUENCE | CELL | SERVICE | CARRIER-END NON-CARRIER-END | HANDOVER |
|---|---|---|---|---|
| 1 | BTS01-F-4 | Re16 | NON-CARRIER-END | - |
| 2 | BTS01-E-4 | Re16 | NON-CARRIER-END | IN-STATION |
| 3 | BTS01-D-4 | Re16 | NON-CARRIER-END | IN-STATION |
| 4 | BTS08-A-4 | Re16 | NON-CARRIER-END | INTER-STATION |
| 5 | BTS08-B-4 | Re16 | NON-CARRIER-END | IN-STATION |
| 6 | BTS08-C-4 | Re16 | NON-CARRIER-END | IN-STATION |
| 7 | BTS09-F-4 | Re16 | NON-CARRIER-END | INTER-STATION |
| 8 | BTS09-A-4 | Re16 | NON-CARRIER-END | IN-STATION |
| 9 | BTS09-B-4 | Re16 | CARRIER-END | IN-STATION |
| 10 | BTS09-B-1 | Re15 | NON-CARRIER-END | INTER-FREQUENCY |
| 11 | BTS03-E-1 | Re15 | NON-CARRIER-END | INTER-STATION |
| 12 | BTS03-D-1 | Re15 | NON-CARRIER-END | IN-STATION |
| 13 | BTS10-A-1 | Re15 | NON-CARRIER-END | INTER-STATION |
| 14 | BTS10-B-1 | Re15 | NON-CARRIER-END | IN-STATION |

As can be seen from Table 1, the cells BTS01-F-4 through BTS09-A-4 are non-carrier-ends, and, at each of those non-carrier-ends, an in-station handover or an inter-station handover is performed while the carrier remains the carrier C4. The cell BTS09-B-4 is the carrier-end. Therefore, the Rel. 6 service using the carrier C4 is not provided in the next sector. Accordingly, an inter-frequency handover from the cell BTS09-B-4 to the cell BTS09-B-1 is performed within the sector B of the same base station BTS09. After that, from the cell BTS09-B-1 to the cell BTS10-B-1, an in-station handover or an inter-station handover is performed while the carrier remains the carrier C1.

It should be noted that, even in the cells BTS01-F-4 through BTS09-B-4, an inter-frequency handover may be performed depending on the degree of convergence (congestion).

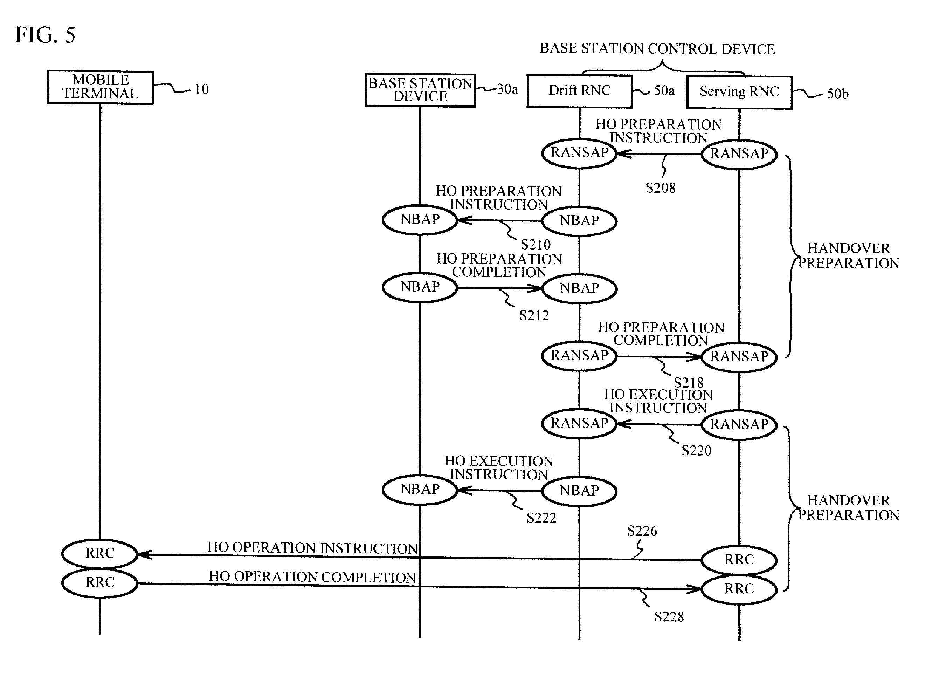

Next, examples of handovers are described. FIG. 5 is a diagram showing an example of an in-station handover operation using a HS-DSCH (High Speed Downlink Shared Channel). In FIG. 5, the base station control device 50 includes a D-RNC (Drift Radio Network Controller) 50a and a S-RNC (Serving Radio Network Controller) 50b. The D-RNC 50a mainly controls the resource function at the time of a handover, and the S-RNC mainly performs call control.

A base station device 30a is the base station device with which the mobile terminal 10 is communicating. RRC (Radio Resource Control), RNSAP (Radio Network Subsystem Application Part), and NBAP (NodeB Application Part) represent communication protocols.

As shown in FIG. 5, the S-RNC 50b first issues a handover (HO) preparation instruction to the D-RNC 50a (step S208). The D-RNC 50a issues a HO preparation instruction to the base station device 30a (step S210). When a HO preparation is completed, the base station device 30a notifies the D-RNC 50a of the completion of a HO preparation (step S212). The D-RNC 50a notifies the S-DNC 50b of the completion of a HO preparation (step S218). Through the above procedures, a HO preparation is completed.

The S-RNC 50b issues a HO execution instruction to the D-RNC 50a (step S220). The D-RNC 50a issues a HO execution instruction to the base station device 30a (step S222). The S-RNC 50b issues a HO operation instruction to the mobile terminal 10 (step S226). When a HO operation is completed, the mobile terminal 10 notifies the S-RNC 50b of the completion of a HO operation (step S228). Through the above procedures, HO execution is completed. As described above, an in-station handover is completed with eight messages.

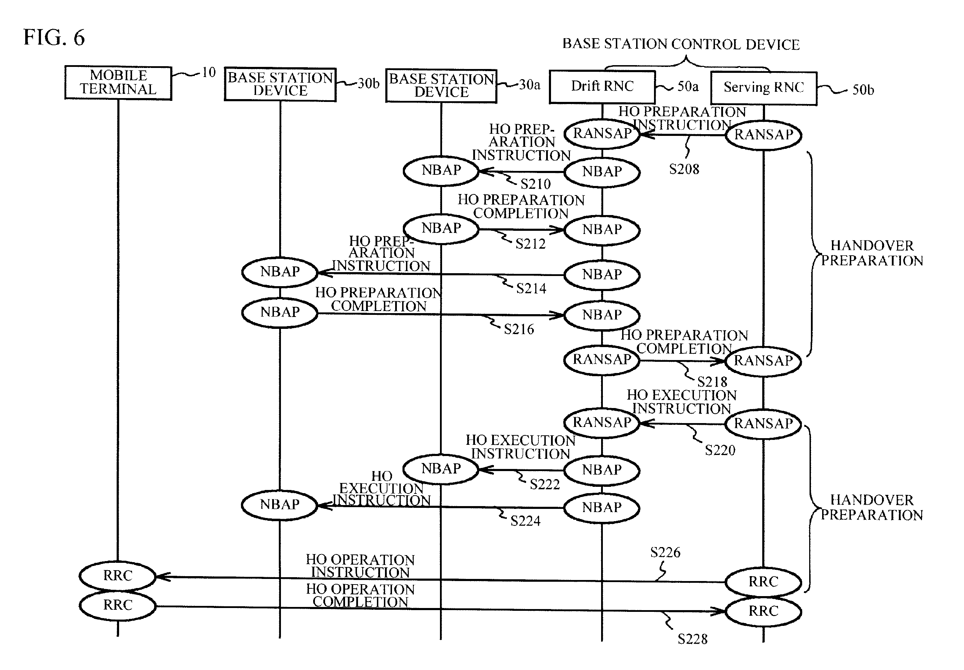

FIG. 6 is a diagram showing an example of an inter-station handover operation using a HS-DSCH. In FIG. 6, a base station device 30b is the target base station device of a handover to be performed. As shown in FIG. 6, after step S212, the D-RNC 50a issues a HO preparation instruction to the base station device 30b (step S214). When a HO preparation is completed, the base station device 30b notifies the D-RNC 50a of the completion of a HO preparation (step S216). Also, after step S222, the D-RNC 50a issues a HO execution instruction to the base station device 30b (step S224). The other steps are the same as those shown in FIG. 5, and therefore, explanation of them is omitted herein.

As described above, for an inter-station handover, the D-RNC 50a also issues a HO preparation instruction and a HO execution instruction to the base station device 30b, and therefore, the number of messages is eleven.

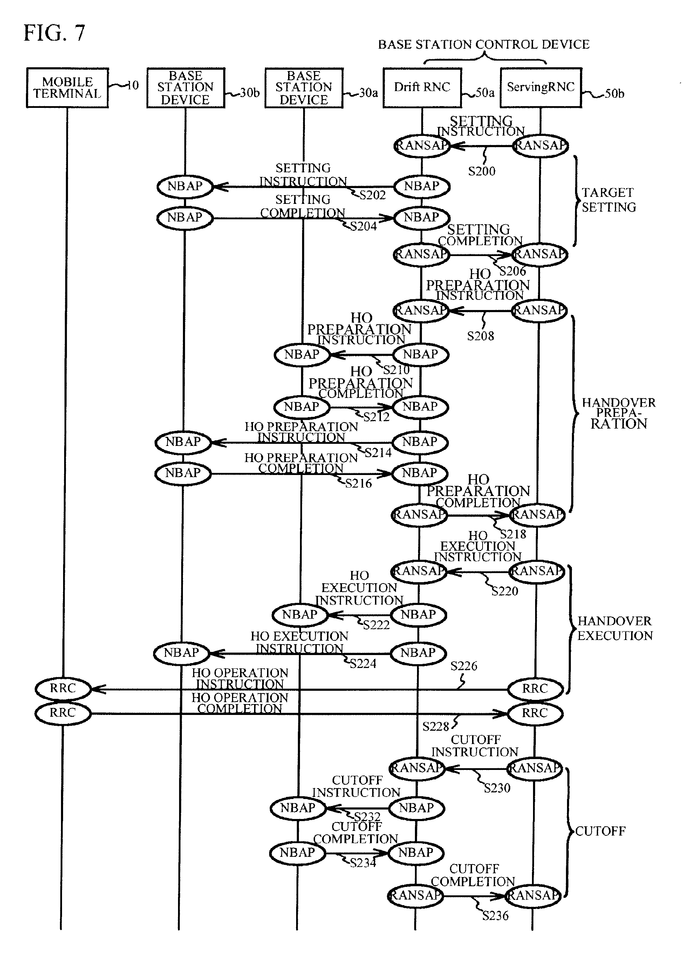

FIG. 7 is a diagram showing an example of an inter-frequency handover operation using a HS-DSCH. As shown in FIG. 7, the S-RNC 50b issues a setting instruction to the D-RNC 50a (step S200). The D-RNC 50a issues a HO setting instruction to the base station device 30b (step S202). When setting is completed, the base station device 30b notifies the D-RNC 50a of the completion of setting (step S204). The D-RNC 50a notifies the S-RNC 50b of the completion of setting (step S206). Through the above procedures, the setting process for a handover to the carrier C1 of the base station device 30b is completed.

After step S228, the S-RNC 50b issues a cutoff instruction to the D-RNC 50a (step S230). The D-RNC 50a issues a cutoff instruction to the base station device 30a (step S232). When cutoff is completed, the base station device 30a notifies the D-RNC 50a of the completion of cutoff (step S234). The D-RNC 50a notifies the S-RNC 50b of the completion of cutoff (step S206). Through the above procedures, a cutoff process for the carrier C4 of the base station device 30a is completed. The other steps are the same as those shown in FIG. 6, and therefore, explanation of them is omitted herein.

As described above, for an inter-frequency handover, setting of the base station device 30b and cutoff of the base station device 30a are performed, and accordingly, the number of messages becomes nineteen.

Table 2 shows examples of the numbers of messages and the processing periods of an in-station handover, an inter-station handover, and an inter-frequency handover. As for the in-station handover, the number of messages is eight, and accordingly, the processing period is as short as 1.6 seconds. As for the inter-station handover, the number of messages is eleven, and the processing period is 2.2 seconds. As for the inter-frequency handover, the number of messages is as large as nineteen, and the processing period is 3.8 seconds. Furthermore, if a search is conducted to detect a cell for a handover to a different frequency, the processing period becomes 8.4 seconds.

[Table 2]

| HANDOVER | NUMBER OF MESSAGES | PROCESSING PERIOD [SEC] |
| --- | --- | --- |
| IN-STATION | 8 | 1.6 SECONDS |
| INTER-STATION | 11 | 2.2 SECONDS |
| INTER-FREQUENCY | 19 | 3.8 SECONDS (8.4 SECONDS) |

In a case where the processing period of a handover is long, if the mobile terminal 10 is moving at a high speed, the handover might not be performed properly. For example, when the mobile terminal 10 moves along the path L1 in FIG. 3, if an inter-frequency handover is not properly performed in the carrier-end cell BTS09-B-4, communication cutoff occurs. In the case of a high-quality data communication that is required to have real-time properties, communication cutoff results in quality degradation. For example, where the coverage of the carrier-end cell is 450 m, and the moving speed of the mobile terminal is 200 km/h (55 m/s), the period of time required by the mobile terminal 10 to pass through the cell is 8.1 seconds. In this manner, the mobile terminal 10 moves past the cell before a handover is performed. If the received powers of common channels of base stations or sectors are compared to perform a handover, the handover cannot be completed while the mobile terminal is passing through the cell. In the embodiment 1, the above problem is solved, and handovers are properly performed.

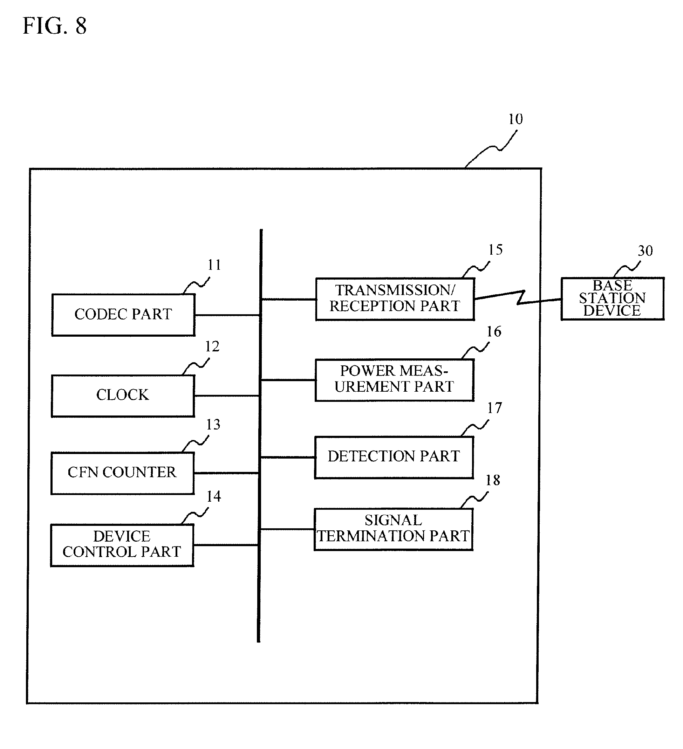

FIG. 8 is a block diagram of the mobile terminal 10 of the embodiment 1. As shown in FIG. 8, the mobile terminal 10 includes a codec part 11, a clock 12, a CFN (Connection Flam No.) counter 13, a device control part 14, a transmission/reception part 15, a power measurement part 16, a detection part 17, and a signal termination part 18. The transmission/reception part 15 exchanges signals or information with the base station device 30. The codec part 11 decodes signal codes received from the base station device 30. The clock 12 generates a clock for synchronization. The CFN counter 13 counts the number of frames so that the base station device 30 and the base station control device 50 are synchronized with the frames. The device control part 14 controls the respective parts. For example, a handover is performed in accordance with an instruction from the base station device 30. For example, the device control part 14 (the handover operation part) performs a handover in accordance with an instruction based on the moving speed and moving direction of the mobile terminal 10. The instruction is issued from the later described base station control device 50. The power measurement part 16 measures the received power of a CPICH (Common Pilot Channel). The information about the measured power is output to the base station device 30 via the transmission/reception part 15. The detection part 17 detects the moving speed and moving direction of the mobile terminal 10, using a GPS (Global Positioning System), for example. The information about the detected moving speed and moving direction is transmitted to the base station device 30 via the transmission/reception part 15. The signal termination part 18 recognizes the signals received from the base station device 30 and the base station control device 50, and performs operations in accordance with each signal.

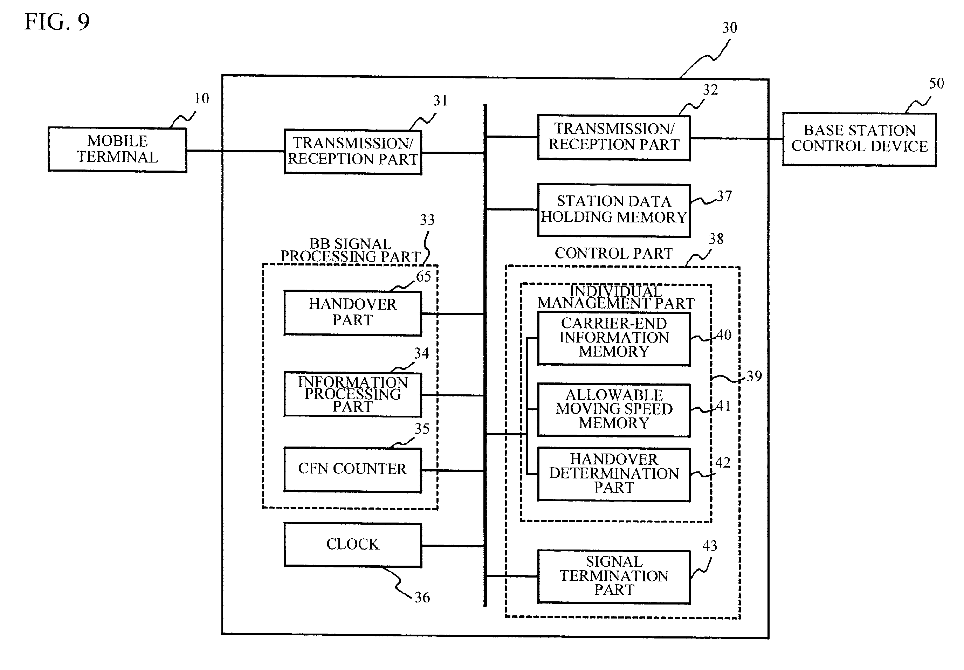

FIG. 9 is a block diagram of the base station device 30 of the embodiment 1. As shown in FIG. 9, the base station device 30 includes transmission/reception parts 31 and 32, a BB (Base Band) signal processing part 33, a clock 36, a station data memory 37, and a control part 38. The transmission/reception part 31 exchanges signals or information with the mobile terminal 10. The transmission/reception part 32 exchanges signals or information with the base station control device 50. The BB signal processing part 33 processes signals in the base band. For example, the BB signal processing part 33 processes information about the CPICH power received from the mobile terminal 10, and outputs the processed information to the base station control device 50. The BB signal processing part 33 also manages the contents of operations of each mobile terminal 10. Further, the BB signal processing part 33 includes a handover operation part 65, an information processing part 34, and a CFN counter 35. The handover operation part 65 performs a handover of the mobile terminal 10, based on an instruction from the base station control device 50. The information processing part 34 processes the information about the moving speed of the mobile terminal 10 and the information about the moving direction received from the mobile terminal 10, and outputs the processed information to the control part 38. The CFN counter 35 counts the number of frames so as to achieve frame synchronization. The clock 36 generates a clock.

The station data memory 37 is a memory that stores various kinds of data about the base station device 30. The control part 38 controls call processing. The control part 38 includes an individual management part 39 and a signal termination part 43. The individual management part 39 manages respective cells independently of one another. Further, the individual management part 39 includes a carrier-end information memory 40, an allowable moving speed memory 41, and a handover determination part 42. The carrier-end information memory 40 stores carrier-end information indicative of whether each cell is a carrier-end cell or a non-carrier-end cell. The allowable moving speed memory 41 stores the allowable moving speeds of the respective cells. The handover determination part 42 determines whether to issue a handover request to the base station control device 50, based on the carrier-end information, the allowable speed information, the information about the moving speed, and the information about the moving direction. The signal termination part 43 recognizes signals received from the mobile terminal 10 and the base station control device 50, and performs operations in accordance with the respective signals.

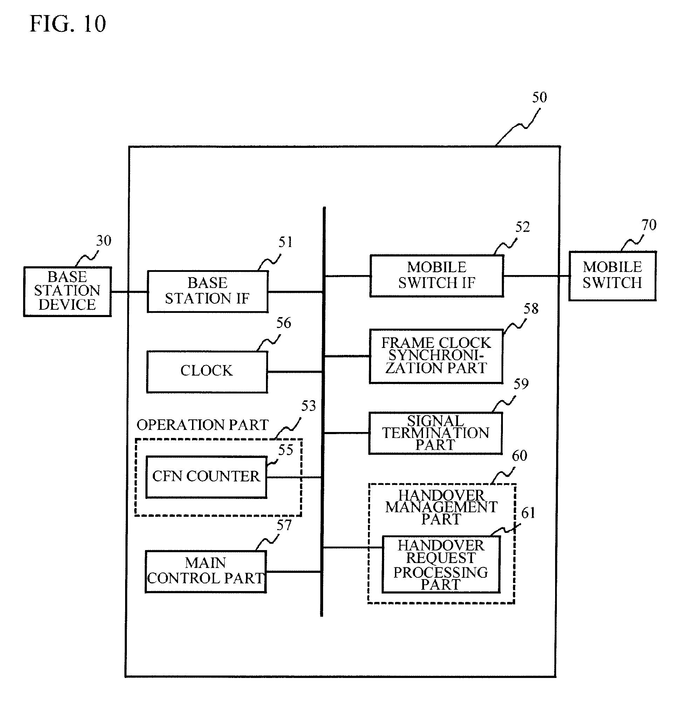

FIG. 10 is a block diagram of the base station control device 50 of the embodiment 1. As shown in FIG. 10, the base station device 30 includes a base station IF (interface) 51, a mobile switch IF 52, an operation part 53, a clock 56, a main control part 57, a frame clock synchronization part 58, a signal termination part 59, and a handover management part 60. The base station IF 51 performs inputting and outputting of signals to and from the base station device 30. The mobile switch IF performs inputting and outputting of signals to and from a mobile switch 70. The operation part 53 manages the contents of operations of the mobile terminal 10 and the base station device 30. The operation part 53 also manages the contents of operations on the network side of the mobile switch 70. Further, the operation part 53 includes a CFN counter 55 that counts the number of frames. The clock 56 generates a clock. The main control part 57 controls the respective parts. The frame clock synchronization part 58 synchronizes the mobile terminal 10 and the base station device 30 with the frames. The signal termination part 59 recognizes signals received from the mobile terminal 10, the base station device 30, and the mobile switch 70, and performs operations in accordance with the respective signals.

The handover management part 60 manages handovers. For example, based on the CPICH power of the mobile terminal 10 received from the base station device 30, the handover management part 60 instructs the mobile terminal 10 and the base station device 30 to perform a handover. Further, the handover management part 60 includes a handover request processing part 61. In response to a handover request received from the base station device 30, the handover request processing part 61 instructs the mobile terminal 10 and the base station device 30 to perform a handover.

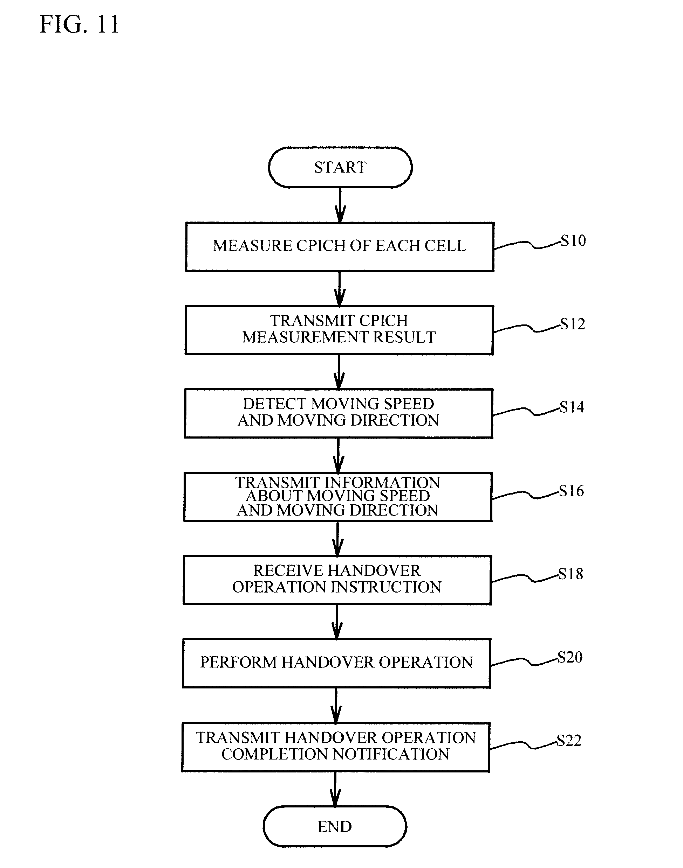

FIG. 11 is a flowchart showing an operation of the mobile terminal 10 according to the embodiment 1. As shown in FIG. 11, the power measurement part 16 measures the CPICH power received from each base station device (step S10). The device control part 14 transmits the information about the CPICH power to the base station control device 50 via the base station device 30 (step S12). The detection part 17 detects the moving speed and moving direction of the mobile terminal 10 (step S14). The device control part 14 transmits the information about the moving speed and the information about the moving direction to the base station device 30 (step S16). The device control part 14 receives a handover operation instruction from the base station control device 50 (step S18). The device control part 14 performs a handover (step S20). The device control part 14 transmits a handover operation completion notification to the base station control device 50 (step S22). The operation then comes to an end, and returns to step S10. Steps S10 and S12, and steps S14 and S16 may be reversed in sequence, or may be carried out in parallel.

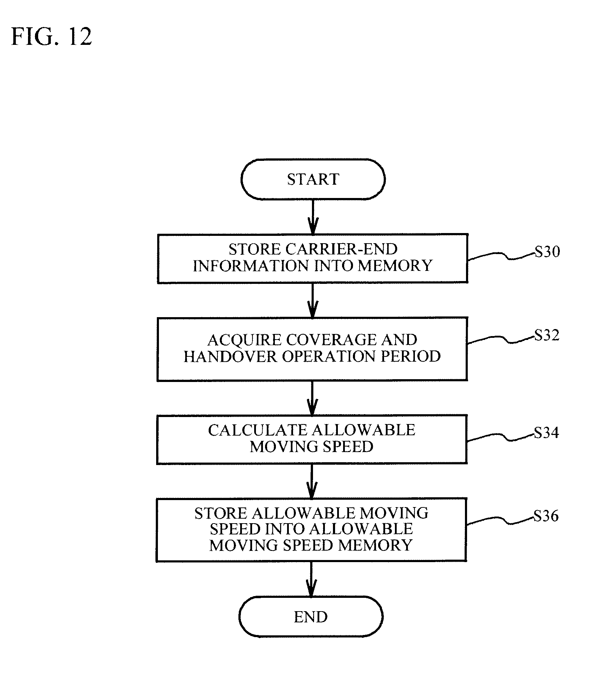

FIG. 12 is a flowchart showing an operation to be performed when the setting of the base station device 30 is performed in the embodiment 1. It should be noted that the setting of the base station device 30 may be performed when the base station device 30 is constructed, or when a file or the like is changed. Alternatively, the setting of the base station device 30 may be performed on a regular basis. As shown in FIG. 12, the control part 38 stores the carrier-end information about each cell into the carrier-end information memory 40 (step S30). The control part 38 acquires the coverage and handover operation period of each cell (step S32). Here, the coverage of a cell may be the diameter of the cell, or may be the mean distance over which the mobile terminal 10 travels to move past the cell, for example. The control part 38 calculates the allowable moving speed from the coverage and handover operation period of each cell (step S34). If the moving speed of the mobile terminal is higher than the allowable moving speed, a handover of the mobile terminal 10 cannot be performed within the cell. For example, the allowable moving speed is expressed as follows:

$$\text{Allowable moving speed} = \text{coverage/handover operation period}$$

In an example case where the coverage is 450 m, and the handover operation period is 8.4 seconds, the allowable moving speed is calculated as follows:

$$\text{Allowable moving speed} = 0.450 \text{ km}/8.3 \text{ s}/3600$$
$$= 193 \text{ km/h}$$

The control part 38 stores the calculated allowable moving speed into the allowable moving speed memory 41 (step S36). The operation then comes to an end.

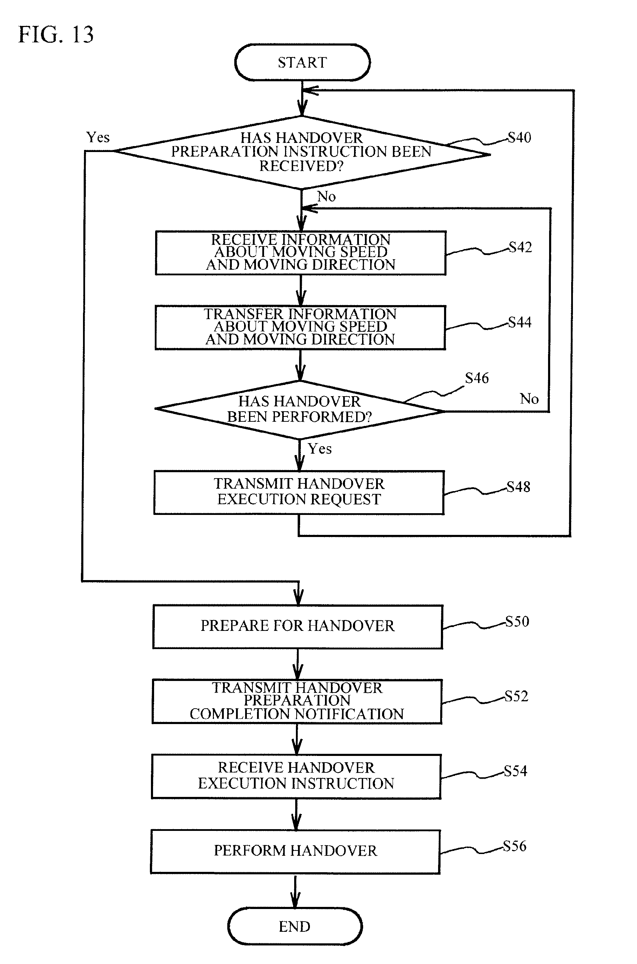

FIG. 13 is a flowchart showing an operation of the base station device 30 according to the embodiment 1. As shown in FIG. 13, the handover operation part 65 determines whether a handover preparation instruction has been received from the base station control device 50 (step S40). If the determination result is "No", the information processing part 34 receives the information about the moving sped and the information about the moving direction from the mobile terminal 10 (step S42). The information processing part 34 transfers the information about the moving speed and the information about the moving direction to the handover determination part 42 of the control part 38 (step S44). The handover determination part 42 determines whether a handover is to be performed (step S46). For example, if the moving speed of the mobile terminal 10 is higher than the allowable moving speed, the moving direction is such a direction as to move away from the base station device 30, and the cell is a carrier-end cell, the handover determination part 42 determines the result to be "Yes". If the result is "Yes", the handover determination part 42 transmits a handover execution request to the base station control device 50 (step S48). If the result of step S46 is "No", the operation returns to step S42.

If the result of step S40 is "Yes", the handover operation part 65 prepares for a handover (step S50). The handover operation part 65 transmits a handover preparation completion notification to the base station control device 50 (step S52). The handover operation part 65 receives a handover execution instruction from the base station control device 50 (step S54). The handover operation part 65 performs a handover (step S56). The operation then comes to an end, and returns to step S40.

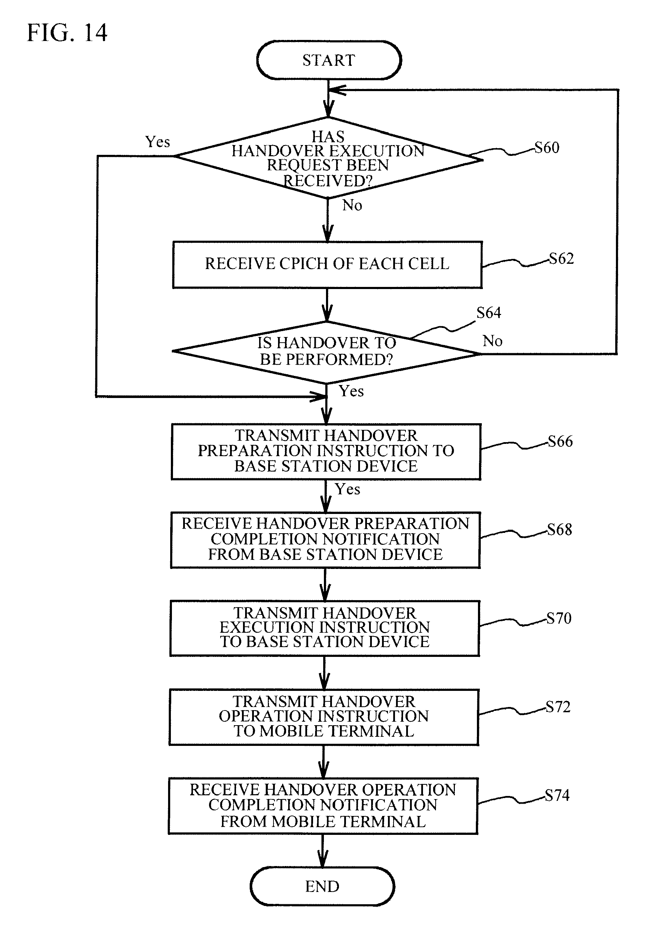

FIG. 14 is a flowchart showing an operation of the base station control device 50. As shown in FIG. 14, the handover request processing part 61 determines whether a handover execution request has been received from the base station device 30 (step S60). If the result is "Yes", the operation moves on to step S66. If the result is "No", the handover management part 60 receives the information about the CPICH received power of each cell from each mobile terminal 10 to be subjected to a handover (step S62). The handover management part 60 determines whether a handover is to be performed (step S64). If there exists an active cell having a larger CPICH received power than that of the current cell, the handover management part 60 determines the result to be "Yes". If the result is "Yes", the operation moves on to step S66. If the result is "No", the operation returns to step S60.

If the result of step S60 or step S64 is "Yes", the handover management part 60 transmits a handover preparation instruction to the base station device 30 (step S66). The handover management part 60 receives a handover preparation completion notification from the base station device 30 (step S68). The handover management part 60 transmits a handover execution instruction to the base station device 30 (step S70). The handover management part 60 transmits a handover operation instruction to the mobile terminal 10 (step S72). The handover management part 60 receives a handover operation completion notification from the mobile terminal 10 (step S74). The operation then comes to an end, and returns to step S60.

According to the embodiment 1, as in steps S46 and S48 of FIG. 13, the handover operation part 65 of the base station device 30 issues a request for a handover of the mobile terminal 10 to the base station control device 50, based on the moving speed and moving direction of the mobile terminal 10. Since a handover request is made depending on the moving direction as well as the moving speed of the mobile terminal 10 as described above, a handover can be properly performed even when the mobile terminal 10 is about to have communication cutoff.

Also, as in the embodiment 1, the control part 38 can request a handover, based on the information about the moving speed and moving direction of the mobile terminal 10, which is received from the mobile terminal 10.

Further, in the embodiment 1, the control part 38 requests a handover, when the moving speed is equal to or higher than a predetermined value (the allowable moving speed), and the moving direction is such a direction as to move away from the base station device 30. When the moving speed is equal to or higher than the allowable moving speed, communication cutoff easily occurs. When the mobile terminal 10 is moving in such a direction as to move away from the base station device 30, the mobile terminal 10 is moving out of the coverage area of the base station device 30, and communication cutoff more easily occurs. In the embodiment 1, handovers can be properly performed even in such cases.

In step S16 of FIG. 11, the information about the moving direction transmitted to the base station device 30 by the device control part 14 may be represented by "+" when the mobile terminal 10 is moving toward the base station device 30, and may be represented by "-" when the mobile terminal 10 is moving away from the base station device 30, for example. The information about the moving speed may be a component of the moving speed in such a direction as to move toward or away from the base station device 30, for example. In this manner, simpler information transmission can be performed.

As in step S34 of FIG. 12, the control part 38 can calculate the predetermined value (the allowable moving speed), based on the coverage of the cell and the period of time required for a handover in the cell to which the mobile terminal 10 belongs. For example, the allowable moving speed may be expressed as "the coverage of the cell/the handover operation period". Accordingly, a handover can be performed within the period of time required by the mobile terminal 10 to move past the cell. To allow a reasonable margin, the allowable moving speed may be determined by subtracting a predetermined value from "the coverage/the handover operation period". Alternatively, "the coverage/the handover operation period" may be multiplied by a predetermined count number.

Also, in step S46 of FIG. 13, the control part 38 may determine handover execution, depending on whether the moving direction of the mobile terminal is such a direction as to move toward the region A 1 shown in FIG. 3.

As shown in FIG. 3, the cell BTS09-B-4 is the cell at an end of the region A1 in which the frequency for communications with the mobile terminal 10 is provided. In this case, the frequency at which the communication with the mobile terminal 10 is being currently made is not used in the next cell. Therefore, communication cutoff occurs unless an inter-frequency handover is performed. In such a case, the control part 38 preferably performs an inter-frequency handover to a different frequency.

Even in the case of an in-station handover or an inter-station handover, when the mobile terminal 10 is moving at a high speed, communication cutoff might occur if the handover is performed too late. Therefore, a handover requested by the control part 38 of the base station device 30 may be an in-station handover or an inter-station handover.

EMBODIMENT 2

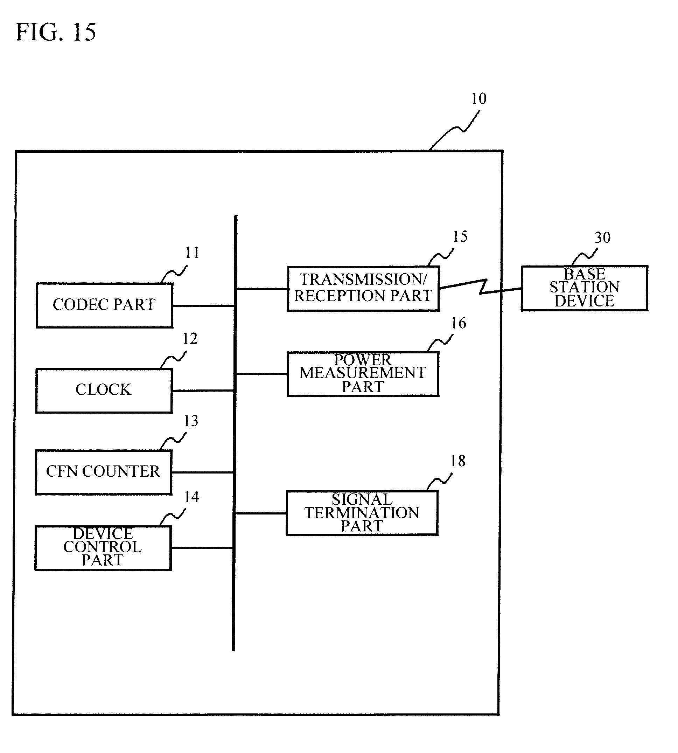

An embodiment 2 is an example in which the base station device 30 detects the moving speed and moving direction of the mobile terminal 10. FIG. 15 is a block diagram of the mobile terminal 10 of the embodiment 2. As shown in FIG. 15, the mobile terminal 10 of the embodiment 2 does not include a detection part. The other aspects of the structure are the same as those of the embodiment 1 shown in FIG. 8, and therefore, explanation of them is omitted herein.

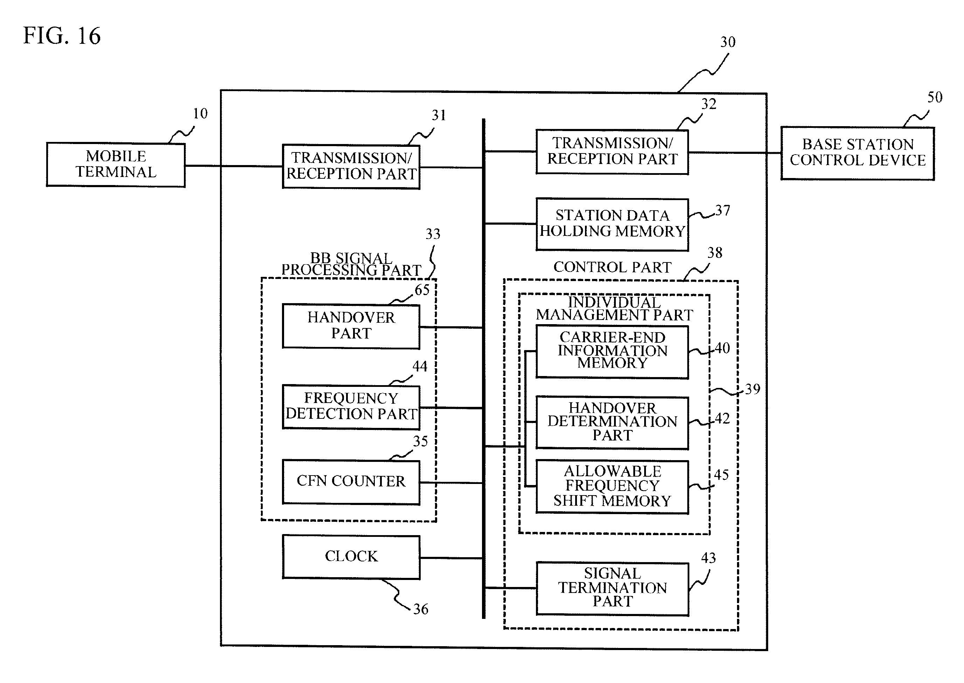

FIG 16 is a block diagram of the base station device 30 of the embodiment 2. As shown in FIG. 16, the BB signal processing part 33 of the base station device 30 of the embodiment 2 includes a frequency detection part 44, instead of an information processing part. The frequency detection part 44 detects the frequencies of uplink radio waves from the mobile terminal 10. The control part 38 includes an allowable frequency shift memory 45, instead of an allowable moving speed memory. The allowable frequency shift memory 45 stores the allowable frequency shift of each cell. The handover determination part 42 determines whether to issue a handover request to the base station control device 50, based on the carrier-end information and the allowable frequency shift. The other aspects of the structure are the same as those of the embodiment 1 shown in FIG. 9, and therefore, explanation of them is omitted herein.

The structure of the base station control device 50 of the embodiment 2 is the same as that of the embodiment 1 shown in FIG. 10, and therefore, explanation thereof is omitted herein.

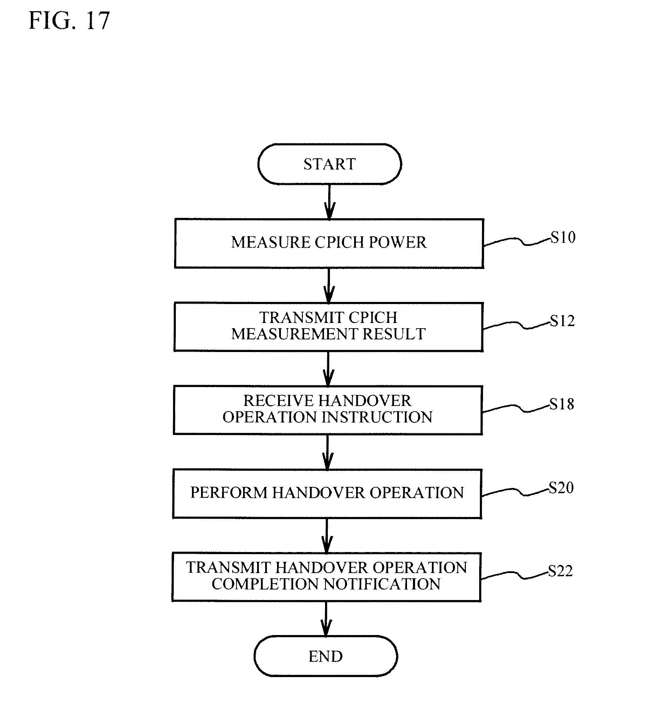

FIG. 17 is a flowchart showing an operation of the mobile terminal 10 in the embodiment 2. As shown in FIG 17, in the embodiment 2, steps S14 and S16 of the embodiment 1 shown in FIG. 11 are not carried out. The other steps are the same as those of the embodiment 1 shown in FIG. 11, and therefore, explanation of them is omitted herein.

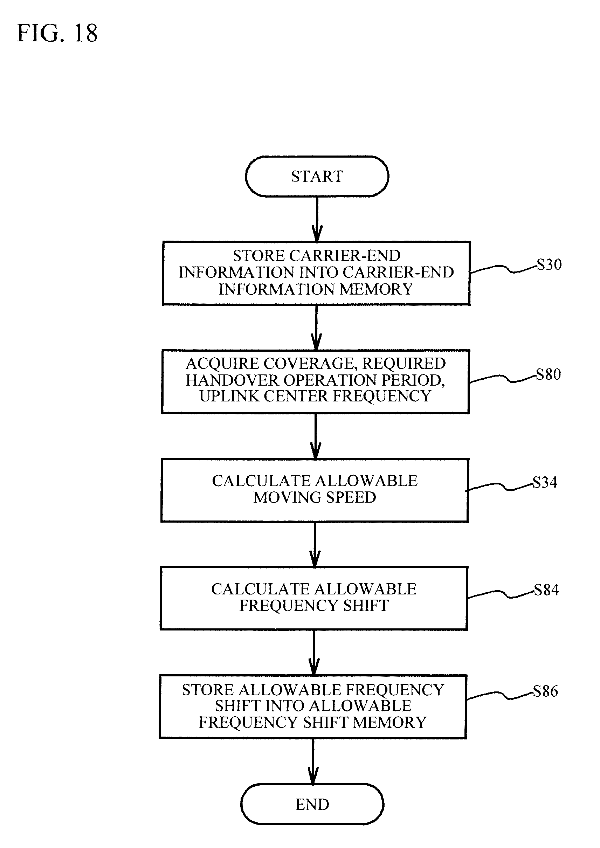

FIG. 18 is a flowchart showing an operation to be performed when the setting of the base station device 30 is performed in the embodiment 2. As shown in FIG. 18, the control part 38 stores the carrier-end information about each cell into the carrier-end information memory 40 (step S30). The control part 38 acquires the coverage, the handover operation period, and the uplink center frequency of each cell (step S 80). The control part 38 calculates the allowable moving speed from the coverage and handover operation period of each cell (step S34). The allowable moving speed is calculated in the same manner as in the embodiment 1, for example. The control part 38 calculates an allowable frequency shift from the allowable moving sped and the uplink center frequency (step S84). The control part 38 stores the calculated allowable frequency shift into the allowable frequency shift memory 45 (step S86). The operation then comes to an end.

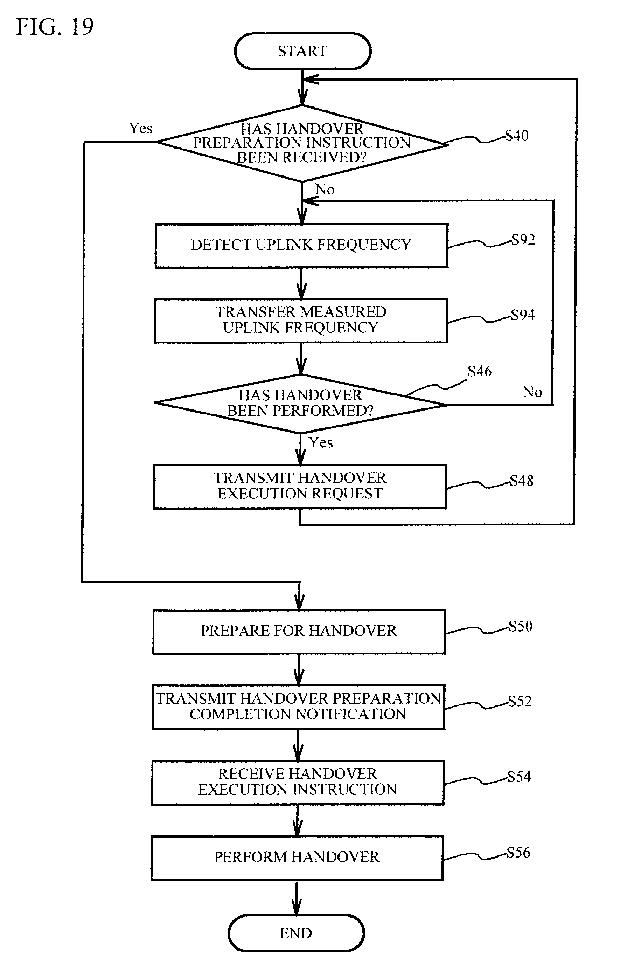

FIG. 19 is a flowchart showing an operation of the base station device 30 in the embodiment 2. As shown in FIG. 19, if the result of step S40 is "No", the frequency detection part 44 detects the frequencies of uplink radio waves from the mobile terminal 10 (step S92). The frequency detection part 44 transfers the uplink frequencies to the handover determination part 42 (step S94). The handover determination part 42 determines whether a handover is to be performed (step S46). For example, when the frequency shift from the uplink center frequency of the uplink frequencies detected by the frequency detection part 44 is larger than the allowable frequency shift, and the mobile terminal 10 belongs to a carrier-end cell, the handover determination part 42 determines that a handover is to be performed. If the result is "Yes", the operation moves on to step S48. If the result is "No", the operation returns to step S90. The other steps are the same as those of the embodiment 1 shown in FIG. 13, and therefore, explanation of them is omitted herein.

The operation of the base station control device 50 of the embodiment 2 is the same as that of the embodiment 2 shown in FIG. 14, and therefore, explanation thereof is omitted herein.

In the embodiment 2, the control part 38 calculates the moving speed and the moving direction, using a Doppler shift. The radio wave frequency f shifted by a Doppler effect is expressed as follows:

$$ f' = f \times (V\text{-}V0)/(V\text{-}Vs) $$

Here, f represents the frequency prior to the shifting, V represents the radio wave propagation rate, V0 represents the speed of the base station device 30, and Vs represents the moving speed (a negative value when the mobile terminal 10 is moving away, a positive value when the mobile terminal 10 is moving closer) of the mobile terminal 10.

Since the speed V0 of the base station device 30 is 0, and V is the light speed C, the radio wave frequency f is expressed as follows:

$$ f' = f \times (C/(C\text{-}Vs)) $$

As the mobile terminal 10 moves closer to the base station device 30, the frequency becomes higher. As the mobile terminal 10 moves away from the base station device 30, the frequency becomes lower.

If the frequency shift caused at the allowable moving speed of the embodiment 1 is set as the allowable frequency shift, a case where the frequency shift f-f is larger than the allowable frequency shift is equivalent to a case where the moving speed is higher than the allowable moving speed in the embodiment 1. For example, where the center frequency f of radio waves is 800 MHz, the frequency f corresponding to the allowable moving speed of 193 Km/h of the embodiment 1 is expressed as follows:

$$ f' = 800 \times 10^6 \times (3{\times}10^8/(3{\times}10^8\text{-}(\text{-}193))) = 799999485.3 \text{ Hz} $$

Accordingly, the following equation is satisfied:

$$\text{Allowable frequency shift} = 799999485.3 - 800000000 = -514.7 \text{ Hz}$$

In step S46 of FIG. 19, the control part 38 determines whether the frequency shift is larger than -514.7 Hz. Here, based on the sign of the frequency shift, a check can be made to determine whether the moving direction of the mobile terminal 10 is such a direction as to move toward the base station device 30 or such a direction as to move away from the base station device 30.

According to the embodiment 2, as in steps S90, S92, and S48 of FIG. 19, the control part 38 issues a request for a handover of the mobile terminal to the base station control device 50, based on the difference between the radio wave frequency received from the mobile terminal 10 and the predetermined frequency (the center frequency). Accordingly, the detection part of the mobile terminal 10 becomes unnecessary.

Also, in the embodiment 2, the control part 38 requests a handover, if the difference between the radio wave frequency and the predetermined frequency (the center frequency) is equal to or larger than the predetermined value (the allowable frequency shift), and the frequency shift direction is a direction in which the mobile terminal 10 moves away from the base station device 30. In such a case, the moving speed of the mobile terminal 10 is equal to or higher than the allowable moving speed, and the mobile terminal 10 is moving out of the coverage area of the base station device 30. Therefore, communication cutoff more easily occurs. In the embodiment 2, a handover can be properly performed even in such a case.

It should be noted that the base station device 30 has the function to detect and correct a frequency shift caused by a Doppler shift. The frequency detection part 44 of the embodiment 2 may also have the function to detect such a frequency shift.

EMBODIMENT 3

An embodiment 3 is an example in which the base station device 30 transmits a handover inhibition signal to the base station control device. For example, according to the LTE (Long Term Evolution) communication method, target communication speeds are standardized in accordance with the moving speed of the mobile terminal 10. For example, Table 3 shows the target uplink and downlink communication speeds between the mobile terminal 10 and the base station device 30 with respect to the moving speed of the mobile terminal 10 in a case where the frequency width between carriers is 20 MHz. Table 4 shows the target uplink and downlink communication speeds (target communication speeds) between the mobile terminal 10 and the base station device 30 with respect to the moving speed of the mobile terminal 10 in a case where the frequency width between carriers is 1.4 MHz.

[Table 3]

| MOVING SPEED | COEFFICIENT | TARGET DOWNLINK COMMUNICATION RATE | TARGET UPLINK COMMUNICATION RATE |
|---|---|---|---|
| EQUAL TO OR LESS THAN 10 km/h | 1.0 | 300 Mbps | 75 Mbps |
| EQUAL TO OR LESS THAN 30 km/h | 0.75 | 225 Mbps | 56.25 Mbps |
| EQUAL TO OR LESS THAN 120 km/h | 0.55 | 165 Mbps | 41.25 Mbps |
| EQUAL TO OR LESS THAN 350 km/h | 0.25 | 75 Mbps | 18.75 Mbps |

[Table 4]

| MOVING SPEED | COEFFICIENT | TARGET DOWNLINK COMMUNICATION RATE | TARGET UPLINK COMMUNICATION RATE |
|---|---|---|---|
| EQUAL TO OR LESS THAN 10 km/h | 1.0 | 21 Mbps | 5.25 Mbps |

(continued)

| MOVING SPEED | COEFFICIENT | TARGET DOWNLINK COMMUNICATION RATE | TARGET UPLINK COMMUNICATION RATE |
|---|---|---|---|
| EQUAL TO OR LESS THAN 30 km/h | 0.75 | 15.75 Mbps | 3.94 Mbps |
| EQUAL TO OR LESS THAN 120 km/h | 0.55 | 11.55 Mbps | 2.89 Mbps |
| EQUAL TO OR LESS THAN 350 km/h | 0.25 | 5.25 Mbps | 1.31 Mbps |

As shown in Table 3 and Table 4, according to the LTE communication method, when the moving speed of a mobile terminal becomes higher, the target communication speed is reduced by multiplying the speed of communication at a moving speed of 10 km/h or lower by a coefficient. According to the 3GPP communication method, on the other hand, the communication speed is fixed with respect to the moving speed. Therefore, when an inter-frequency handover from the 3GPP to the LTE communication method, the communication speed might become lower unless the moving speed of the mobile terminal 10 is high. In the embodiment 3, handovers are inhibited in such a case. In the following, an example case where an inter-frequency handover from the 3GP to the LTE communication method is performed is described.

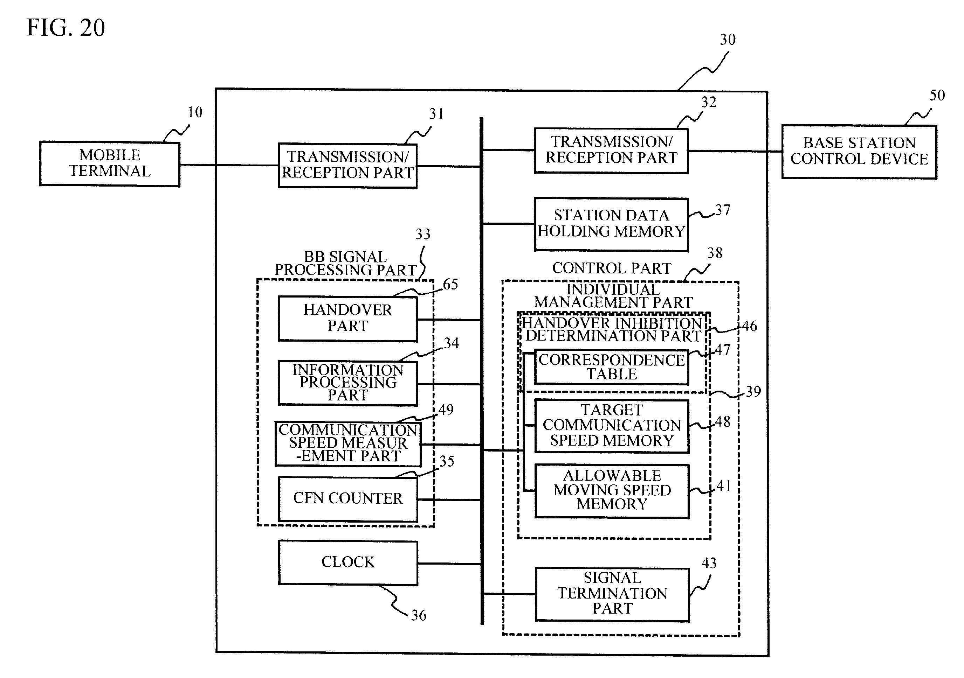

FIG. 20 is a block diagram of the base station device 30 of the embodiment 3. As shown in FIG. 20, the BB signal processing part 33 of the base station device 30 of the embodiment 3 includes a communication speed measurement part 49. The communication speed measurement part 49 measures the speed of communication with the mobile terminal 10. The individual management part 39 includes a handover inhibition determination part 46 and a target communication speed memory 48. The handover inhibition determination part 46 includes a correspondence table 47, and determines whether handovers should be inhibited. The correspondence table 47 is a table showing the correspondence between target communication speeds according to the communication method used in the destination of an inter-frequency handover and moving speeds of the mobile terminal. For example, the correspondence table 47 includes Table 4. The target communication speed memory 48 is a memory that stores a target communication speed according to the communication method used in an inter-frequency handover destination. The other aspects of the structure are the same as those of the embodiment 1 shown in FIG. 9, and therefore, explanation of them is omitted therein. Also, the structures of the mobile terminal 10 and the base station control device 50 are the same as those of the embodiment 1 shown in FIGS. 8 and 10, respectively, and therefore, explanation of them is omitted herein.

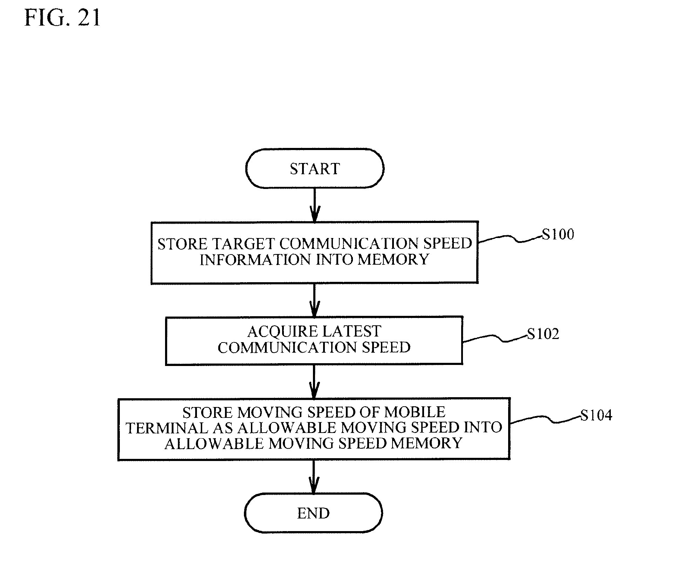

FIG. 21 is a flowchart showing an operation to be performed when the setting of the base station device 30 is performed in the embodiment 3. As shown in FIG. 21, the control part 38 stores the target communication speed information about the destination (the LTE method in this example) of a handover into the target communication speed memory 48 (step S100). The handover inhibition determination part 46 acquires the speed of the current communication with the mobile terminal 10 from the communication speed measurement part 49 (step S102). For example, the handover inhibition determination part 46 acquires a downlink communication speed of 3.00 Mbps, and an uplink communication speed of 2.00 Mbps.

The handover inhibition determination part 46 searches the correspondence table 47 for the lowest target communication speed that is still higher than the speed of the current communication with the mobile terminal 10. The moving speed of the mobile terminal corresponding to the detected target communication speed is stored as the allowable terminal moving speed into the allowable moving speed memory 41 (step S101). For example, in Table 4, the lowest target communication speed that is still higher than 3.00 Mbps in downlink communication speed is 5.25 Mbps. The moving speed of the mobile terminal corresponding to this target communication speed is equal to or lower than 350 km/h. Meanwhile, the lowest target communication speed that is still higher than 2.00 Mbps in uplink communication speed is 2.89 Mbps. The moving speed of the mobile terminal corresponding to this target communication speed is equal to or lower than 120 km/h. The moving speed of the mobile terminal that satisfies both the uplink communication speed and the downlink communication speed is equal to or lower than 120 km/h. Therefore, 120 km/h is stored as the allowable moving speed into the allowable moving speed memory 41. It should be noted that the allowable moving speed may be a moving speed at which one of the uplink communication speed and the downlink communication speed satisfies the above condition.

The flow shown in FIG. 21 is repeated in regular or irregular cycles. Accordingly, the allowable moving speed corresponding to the speed of the latest communication with the mobile terminal 10 is stored into the allowable moving speed memory 41.

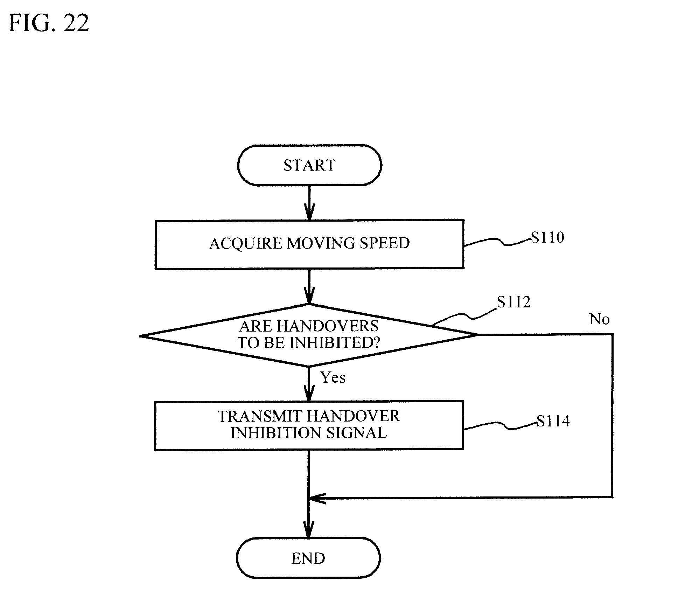

FIG. 22 is a flowchart showing an operation of the base station device 30 in the embodiment 3. As shown in FIG. 22, the handover inhibition determination part 46 acquires the moving speed of the mobile terminal 10 from the information processing part 34 (step S110). The handover inhibition determination part 46 determines whether handovers should be inhibited (step S112). For example, if the moving speed of the mobile terminal 10 is equal to or higher than the allowable moving speed, the handover inhibition determination part 46 determines that handovers should be inhibited. For example, if the moving speed of the mobile terminal is 120 km/h or higher, inter-frequency handovers from the 3GPP to the LTE communication method are inhibited. The handover inhibition determination part 46 transmits a handover inhibition signal to the base station control device 50 (step S114). Receiving the handover inhibition signal, the handover management part 60 of the base station control device 50 issues no handover instructions. Accordingly, the handover operation part 65 performs no handovers.

According to the embodiment 3, the handover operation part 65 performs no handovers if the communication speed of the mobile terminal after a handover is lower than the speed of the current communication with the mobile terminal 10. Accordingly, a reduction in communication speed due to a handover can be prevented.

For example, even where the result of step S46 of FIG. 13 is "Yes", the control part 38 of the base station device 30 issues no handover requests if the communication speed of the mobile terminal 10 after a handover is lower than the current communication speed. Also, even where the result of step S40 of FIG. S15 is "Yes", the handover operation part 65 performs no handovers if the communication speed of the mobile terminal 10 after a handover is lower than the current communication speed. By using the above technique, handovers can be inhibited if the communication speed of the mobile terminal 10 after a handover is lower than the current communication speed.

In the embodiments 1 through 3, the base station control device 50 may be connected to an even higher-level device. Also, the base station device 30 and the base station control device 50 may be formed as an integrated device.

Preferred embodiments of the present invention have been described in detail. The present invention is not limited to the specific embodiments but may be varied or changed within the scope of the claimed invention.

**Claims**

1.   A base station device that performs communication with a mobile terminal, **characterized by** comprising:

     a handover operation part configured to perform a handover of the mobile terminal, based on an instruction from a base station control device; and
     a control part configured to issue a request for the handover of the mobile terminal, based on a moving speed and a moving direction of the mobile terminal, the request being issued to the base station control device.

2.   The base station device according to claim 1, **characterized in that** the control part requests for the handover, when the moving speed is equal to or higher than a predetermined value, and the moving direction is such a direction as to move away from the base station device.

3.   The base station device according to claim 2, **characterized in that** the control part calculates the predetermined value, based on a coverage of a cell to which the mobile terminal belongs and a period of time required for the handover.

4.   The base station device according to any of claims 1 through 3, **characterized in that** the control part requests for the handover, based on information about the moving speed and the moving direction of the mobile terminal, the information being received from the mobile terminal.

5.   The base station device according to any of claims 1 through 3, **characterized in that** the control part issues a request for the handover of the mobile terminal, based on a difference between a predetermined frequency and a frequency of a radio wave received from the mobile terminal, the request being issued to the base station control device.

6.   The base station device according to any of claims 1 through 5, **characterized in that** the control part requests a handover to a different frequency, when a cell to which the mobile terminal belongs to is a cell located at an end of a region in which a frequency of communication with the mobile terminal is provided.

7.   The base station device according to any of claims 1 through 6, **characterized in that** the handover operation part does not perform the handover, when a communication speed of the mobile terminal after the handover is lower than a speed of current communication with the mobile terminal.

8. A communication system **characterized by** comprising:

   a mobile terminal;
   a base station device configured to perform communication with the mobile terminal; and
   a base station control device configured to instruct the base station device to perform a handover of the mobile terminal,
   the base station device including a control part configured to issue a request for the handover of the mobile terminal, based on a moving speed and a moving direction of the mobile terminal, the request being issued to the base station control device.

9. A mobile terminal that performs communication with a base station device, **characterized by** comprising a handover operation part configured to perform a handover in accordance with an instruction based on a moving speed and a moving direction of the mobile terminal, the instruction being issued from a base station control device.

10. A method of controlling a communication system that includes a mobile terminal, a base station device performing communication with the mobile terminal, and a base station control device configured to instruct the base station device to perform a handover of the mobile terminal,
    the method **characterized by** comprising
    issuing a request for the handover of the mobile terminal, based on a moving speed and a moving direction of the mobile terminal, the request being issued to the base station control device.

FIG. 1

FIG. 2

CARRIER

| | | | |
|---|---|---|---|
| C4 | CELL 10 | CELL 11 | CELL 12 |
| C3 | CELL 7 | CELL 8 | CELL 9 |
| C2 | CELL 4 | CELL 5 | CELL 6 |
| C1 | CELL 1 | CELL 2 | CELL 3 |
| | S1 | S2 | S1 |

SECTOR

FIG. 3

FIG. 4

EP 2 413 633 A1

BASE STATION

BTS01    BTS08    BTS09    BTS03    BTS10

POINT P1        POINT P2

| SEQUENCE | 1 | 2 | 3 | 4 | 5 | 6 | 7 | 8 | 9 | 10 | 11 | 12 | 13 |
|---|---|---|---|---|---|---|---|---|---|---|---|---|---|
| SECTOR | F | E | D | A | B | C | F | A | B | E | D | A | B |
| CARRIER C4 | Rel6 | Rel6 | Rel6 | Rel6 | Rel6 | Rel6 | Rel6 | Rel6 | Rel6 | N/A | N/A | N/A | N/A |
| CARRIER C3 | Rel5 | Rel5 | Rel5 | Rel5 | Rel5 | Rel5 | Rel5 | Rel5 | Rel5 | Rel5 | Rel5 | Rel5 | Rel5 |
| CARRIER C2 | Rel5 | Rel5 | Rel5 | Rel5 | Rel5 | Rel5 | Rel5 | Rel5 | Rel5 | Rel5 | Rel5 | Rel5 | Rel5 |
| CARRIER C1 | Rel5 | Rel5 | Rel5 | Rel5 | Rel5 | Rel5 | Rel5 | Rel5 | Rel5 | Rel5 | Rel5 | Rel5 | Rel5 |

# FIG. 5

# FIG. 6

BASE STATION CONTROL DEVICE

MOBILE TERMINAL ~10  BASE STATION DEVICE ~30b  BASE STATION DEVICE ~30a  Drift RNC ~50a  Serving RNC ~50b

HO PREPARATION INSTRUCTION
RANSAP ← RANSAP  S208

HO PREP-ARATION INSTRUCTION
NBAP ← NBAP  S210

HO PREPARATION COMPLETION
NBAP → NBAP  S212

HO PREP-ARATION INSTRUCTION
NBAP ← NBAP  S214

HO PREPARATION COMPLETION
NBAP → NBAP  S216

HO PREPARATION COMPLETION
RANSAP → RANSAP  S218

HANDOVER PREPARATION

HO EXECUTION INSTRUCTION
RANSAP ← RANSAP  S220

HO EXECUTION INSTRUCTION
NBAP ← NBAP  S222

HO EXECUTION INSTRUCTION
NBAP ← NBAP  S224

HANDOVER PREPARATION

S226
HO OPERATION INSTRUCTION
RRC ← RRC

HO OPERATION COMPLETION
RRC → RRC  S228

EP 2 413 633 A1

19

## FIG. 7

BASE STATION CONTROL DEVICE

MOBILE TERMINAL ~10

BASE STATION DEVICE ~30b

BASE STATION DEVICE ~30a

Drift RNC ~50a

ServingRNC ~50b

SETTING INSTRUCTION
RANSAP ← RANSAP
S200

TARGET SETTING

SETTING INSTRUCTION
NBAP ← NBAP
S202

SETTING COMPLETION
NBAP → NBAP
S204

SETTING COMPLETION
RANSAP → RANSAP
S206

HO PREPARATION INSTRUCTION
RANSAP ← RANSAP
S208

HO PREPARATION INSTRUCTION
NBAP ← NBAP
S210

HANDOVER PREPA-RATION

HO PREPARATION COMPLETION
NBAP → NBAP
S212

HO PREPARATION INSTRUCTION
NBAP ← NBAP
S214

HO PREPARATION COMPLETION
NBAP → NBAP
S216

HO PREPARATION COMPLETION
RANSAP → RANSAP
S218

HO EXECUTION INSTRUCTION
RANSAP ← RANSAP
S220

HO EXECUTION INSTRUCTION
NBAP ← NBAP
S222

HANDOVER EXECUTION

HO EXECUTION INSTRUCTION
NBAP ← NBAP
S224

HO OPERATION INSTRUCTION
RRC ← RRC
S226

HO OPERATION COMPLETION
RRC → RRC
S228

CUTOFF INSTRUCTION
RANSAP ← RANSAP
S230

CUTOFF INSTRUCTION
NBAP ← NBAP
S232

CUTOFF

CUTOFF COMPLETION
NBAP → NBAP
S234

CUTOFF COMPLETION
RANSAP → RANSAP
S236

FIG. 8

FIG. 9

MOBILE TERMINAL — 10

TRANSMISSION/ RECEPTION PART — 31

30

TRANSMISSION/ RECEPTION PART — 32

BASE STATION CONTROL DEVICE — 50

STATION DATA HOLDING MEMORY — 37

BB SIGNAL PROCESSING PART — 33

CONTROL PART — 38

HANDOVER PART — 65

INDIVIDUAL MANAGEMENT PART

CARRIER-END INFORMATION MEMORY — 40

39

INFORMATION PROCESSING PART — 34

ALLOWABLE MOVING SPEED MEMORY — 41

CFN COUNTER — 35

HANDOVER DETERMINATION PART — 42

CLOCK

36

SIGNAL TERMINATION PART — 43

EP 2 413 633 A1

FIG. 10

FIG. 11

```
                    ┌──────────────┐
                    │    START     │
                    └──────┬───────┘
                           │
                           ▼
          ┌─────────────────────────────────┐
          │  MEASURE CPICH OF EACH CELL      │─── S10
          └────────────────┬────────────────┘
                           │
                           ▼
          ┌─────────────────────────────────┐
          │  TRANSMIT CPICH                  │─── S12
          │  MEASUREMENT RESULT              │
          └────────────────┬────────────────┘
                           │
                           ▼
          ┌─────────────────────────────────┐
          │  DETECT MOVING SPEED             │─── S14
          │  AND MOVING DIRECTION            │
          └────────────────┬────────────────┘
                           │
                           ▼
          ┌─────────────────────────────────┐
          │  TRANSMIT INFORMATION            │─── S16
          │  ABOUT MOVING SPEED              │
          │  AND MOVING DIRECTION            │
          └────────────────┬────────────────┘
                           │
                           ▼
          ┌─────────────────────────────────┐
          │  RECEIVE HANDOVER                │─── S18
          │  OPERATION INSTRUCTION           │
          └────────────────┬────────────────┘
                           │
                           ▼
          ┌─────────────────────────────────┐
          │  PERFORM HANDOVER OPERATION      │─── S20
          └────────────────┬────────────────┘
                           │
                           ▼
          ┌─────────────────────────────────┐
          │  TRANSMIT HANDOVER OPERATION     │─── S22
          │  COMPLETION NOTIFICATION         │
          └────────────────┬────────────────┘
                           │
                           ▼
                    ┌──────────────┐
                    │     END      │
                    └──────────────┘
```

FIG. 12

```
          ┌─────────────┐
          │    START    │
          └──────┬──────┘
                 │
                 ▼
  ┌───────────────────────────────┐
  │      STORE CARRIER-END         │───S30
  │   INFORMATION INTO MEMORY      │
  └───────────────┬───────────────┘
                  │
                  ▼
  ┌───────────────────────────────┐
  │      ACQUIRE COVERAGE AND      │───S32
  │  HANDOVER OPERATION PERIOD     │
  └───────────────┬───────────────┘
                  │
                  ▼
  ┌───────────────────────────────┐
  │      CALCULATE ALLOWABLE       │───S34
  │        MOVING SPEED            │
  └───────────────┬───────────────┘
                  │
                  ▼
  ┌───────────────────────────────┐
  │    STORE ALLOWABLE MOVING      │───S36
  │     SPEED INTO ALLOWABLE       │
  │     MOVING SPEED MEMORY        │
  └───────────────┬───────────────┘
                  │
                  ▼
          ┌─────────────┐
          │     END     │
          └─────────────┘
```

## FIG. 13

```
                    ┌──────────────┐
                    │    START     │
                    └──────┬───────┘
                           │
                           ▼
         Yes      ╱─────────────────────╲
      ┌─────────── HAS HANDOVER          ╲────S40
      │           ╲ PREPARATION INSTRUCTION BEEN ╱
      │            ╲ RECEIVED?          ╱
      │             ╲─────────┬────────╱
      │                    No │
      │                       ▼
      │           ┌──────────────────────┐
      │           │ RECEIVE INFORMATION  │────S42
      │           │ ABOUT MOVING SPEED   │
      │           │ AND MOVING DIRECTION │
      │           └──────────┬───────────┘
      │                      ▼
      │           ┌──────────────────────┐
      │           │ TRANSFER INFORMATION │────S44
      │           │ ABOUT MOVING SPEED   │
      │           │ AND MOVING DIRECTION │
      │           └──────────┬───────────┘
      │                      ▼
      │             ╱──────────────╲  S46
      │            ╱ HAS HANDOVER   ╲──── No
      │            ╲ BEEN PERFORMED?╱
      │             ╲──────┬───────╱
      │                Yes │
      │                    ▼
      │           ┌──────────────────────┐
      │           │ TRANSMIT HANDOVER    │────S48
      │           │ EXECUTION REQUEST    │
      │           └──────────────────────┘
      │
      ▼
┌──────────────────────┐
│ PREPARE FOR HANDOVER │────S50
└──────────┬───────────┘
           ▼
┌──────────────────────┐
│ TRANSMIT HANDOVER    │────S52
│ PREPARATION          │
│ COMPLETION NOTIFICATION │
└──────────┬───────────┘
           ▼
┌──────────────────────┐
│ RECEIVE HANDOVER     │────S54
│ EXECUTION INSTRUCTION│
└──────────┬───────────┘
           ▼
┌──────────────────────┐
│ PERFORM HANDOVER     │────S56
└──────────┬───────────┘
           ▼
    ┌──────────────┐
    │     END      │
    └──────────────┘
```

FIG. 14

```
                          ┌──────────┐
                          │  START   │
                          └──────────┘
                               │
                               ▼
                         ╱─────────────╲
                   Yes  ╱     HAS        ╲
              ◄────────╱ HANDOVER EXECUTION╲────── S60
                       ╲ REQUEST BEEN       ╱
                        ╲  RECEIVED?       ╱
                         ╲───────────────╱
                               │ No
                               ▼
                    ┌─────────────────────────┐
                    │ RECEIVE CPICH OF EACH CELL│──── S62
                    └─────────────────────────┘
                               │
                               ▼                  S64
                         ╱─────────────╲
                        ╱               ╲   No
                       ╱ IS HANDOVER TO  ╲──────►
                       ╲ BE PERFORMED?   ╱
                        ╲───────────────╱
                               │ Yes
                               ▼
                    ┌─────────────────────────┐
                    │  TRANSMIT HANDOVER       │
                    │  PREPARATION INSTRUCTION TO│──── S66
                    │  BASE STATION DEVICE     │
                    └─────────────────────────┘
                               │ Yes
                               ▼
                    ┌─────────────────────────┐
                    │ RECEIVE HANDOVER PREPARATION│
                    │ COMPLETION NOTIFICATION   │──── S68
                    │ FROM BASE STATION DEVICE  │
                    └─────────────────────────┘
                               │
                               ▼
                    ┌─────────────────────────┐
                    │  TRANSMIT HANDOVER       │
                    │  EXECUTION INSTRUCTION   │──── S70
                    │  TO BASE STATION DEVICE  │
                    └─────────────────────────┘
                               │
                               ▼
                    ┌─────────────────────────┐
                    │  TRANSMIT HANDOVER       │
                    │  OPERATION INSTRUCTION   │──── S72
                    │  TO MOBILE TERMINAL      │
                    └─────────────────────────┘
                               │
                               ▼
                    ┌─────────────────────────┐
                    │ RECEIVE HANDOVER OPERATION│
                    │ COMPLETION NOTIFICATION   │──── S74
                    │ FROM MOBILE TERMINAL      │
                    └─────────────────────────┘
                               │
                               ▼
                          ┌──────────┐
                          │   END    │
                          └──────────┘
```

FIG. 15

**FIG. 16**

EP 2 413 633 A1

FIG. 17

```
              ┌─────────────┐
              │    START    │
              └──────┬──────┘
                     │
                     ▼
       ┌───────────────────────────┐
       │    MEASURE CPICH POWER     │────── S10
       └─────────────┬─────────────┘
                     │
                     ▼
       ┌───────────────────────────┐
       │      TRANSMIT CPICH        │────── S12
       │    MEASUREMENT RESULT      │
       └─────────────┬─────────────┘
                     │
                     ▼
       ┌───────────────────────────┐
       │     RECEIVE HANDOVER       │────── S18
       │   OPERATION INSTRUCTION    │
       └─────────────┬─────────────┘
                     │
                     ▼
       ┌───────────────────────────┐
       │ PERFORM HANDOVER OPERATION │────── S20
       └─────────────┬─────────────┘
                     │
                     ▼
       ┌───────────────────────────┐
       │ TRANSMIT HANDOVER OPERATION│────── S22
       │  COMPLETION NOTIFICATION   │
       └─────────────┬─────────────┘
                     │
                     ▼
              ┌─────────────┐
              │     END     │
              └─────────────┘
```

FIG. 18

```
                        ┌──────────────┐
                        │    START     │
                        └──────┬───────┘
                               │
                               ▼
        ┌──────────────────────────────────┐
        │        STORE CARRIER-END         │
        │ INFORMATION INTO CARRIER-END     │──────S30
        │      INFORMATION MEMORY          │
        └────────────────┬─────────────────┘
                         │
                         ▼
        ┌──────────────────────────────────┐
        │  ACQUIRE COVERAGE, REQUIRED      │
        │ HANDOVER OPERATION PERIOD,       │──────S80
        │   UPLINK CENTER FREQUENCY        │
        └────────────────┬─────────────────┘
                         │
                         ▼
        ┌──────────────────────────────────┐
        │     CALCULATE ALLOWABLE          │──────S34
        │       MOVING SPEED               │
        └────────────────┬─────────────────┘
                         │
                         ▼
        ┌──────────────────────────────────┐
        │     CALCULATE ALLOWABLE          │──────S84
        │      FREQUENCY SHIFT             │
        └────────────────┬─────────────────┘
                         │
                         ▼
        ┌──────────────────────────────────┐
        │ STORE ALLOWABLE FREQUENCY        │──────S86
        │   SHIFT INTO ALLOWABLE           │
        │  FREQUENCY SHIFT MEMORY          │
        └────────────────┬─────────────────┘
                         │
                         ▼
                  ┌──────────────┐
                  │     END      │
                  └──────────────┘
```

FIG. 19

```
                    ┌──────────────┐
                    │    START     │
                    └──────┬───────┘
                           │
            Yes     ◇──────┴──────◇
        ┌───────────  HAS HANDOVER      ~S40
        │           PREPARATION INSTRUCTION
        │            BEEN RECEIVED?
        │           ◇─────┬───────◇
        │                 │ No
        │                 ▼
        │         ┌─────────────────────┐
        │         │ DETECT UPLINK FREQUENCY │  ~S92
        │         └──────────┬──────────┘
        │                    ▼
        │         ┌─────────────────────┐
        │         │  TRANSFER MEASURED   │  ~S94
        │         │   UPLINK FREQUENCY   │
        │         └──────────┬──────────┘
        │                    ▼         S46
        │              ◇─────┴─────◇
        │              HAS HANDOVER       No
        │              BEEN PERFORMED?
        │              ◇─────┬─────◇
        │                    │ Yes
        │                    ▼
        │         ┌─────────────────────┐
        │         │ TRANSMIT HANDOVER    │  ~S48
        │         │ EXECUTION REQUEST    │
        │         └─────────────────────┘
        │
        ▼
 ┌─────────────────────┐
 │ PREPARE FOR HANDOVER │  ~S50
 └──────────┬──────────┘
            ▼
 ┌──────────────────────────┐
 │ TRANSMIT HANDOVER PREPARATION │  ~S52
 │ COMPLETION NOTIFICATION       │
 └──────────┬───────────────┘
            ▼
 ┌─────────────────────┐
 │  RECEIVE HANDOVER    │  ~S54
 │ EXECUTION INSTRUCTION│
 └──────────┬──────────┘
            ▼
 ┌─────────────────────┐
 │  PERFORM HANDOVER    │  ~S56
 └──────────┬──────────┘
            ▼
      ┌──────────┐
      │   END    │
      └──────────┘
```

# FIG. 20

MOBILE TERMINAL — 10

TRANSMISSION/ RECEPTION PART — 31

30

TRANSMISSION/ RECEPTION PART — 32

BASE STATION CONTROL DEVICE — 50

STATION DATA HOLDING MEMORY — 37

BB SIGNAL PROCESSING PART — 33

CONTROL PART — 38

INDIVIDUAL MANAGEMENT PART

HANDOVER PART — 65

HANDOVER INHIBITION DETERMINATION PART — 46

CORRESPONDENCE TABLE — 47

INFORMATION PROCESSING PART — 34

39

COMMUNICATION SPEED MEASUR -EMENT PART — 49

TARGET COMMUNICATION SPEED MEMORY — 48

CFN COUNTER — 35

ALLOWABLE MOVING SPEED MEMORY — 41

CLOCK

36

SIGNAL TERMINATION PART — 43

EP 2 413 633 A1

33

FIG. 21

```
          ╭─────────────╮
          │    START    │
          ╰─────────────╯
                 │
                 ▼
  ┌──────────────────────────────────┐
  │ STORE TARGET COMMUNICATION SPEED │─────S100
  │      INFORMATION INTO MEMORY     │
  └──────────────────────────────────┘
                 │
                 ▼
     ┌──────────────────────────┐
     │     ACQUIRE LATEST       │─────S102
     │   COMMUNICATION SPEED    │
     └──────────────────────────┘
                 │
                 ▼
  ┌──────────────────────────────────┐
  │    STORE MOVING SPEED OF MOBILE  │
  │ TERMINAL AS ALLOWABLE MOVING SPEED INTO │─────S104
  │   ALLOWABLE MOVING SPEED MEMORY  │
  └──────────────────────────────────┘
                 │
                 ▼
          ╭─────────────╮
          │     END     │
          ╰─────────────╯
```

FIG. 22

```
          ┌──────────────┐
          │    START     │
          └──────┬───────┘
                 │
                 ▼
    ┌───────────────────────────┐
    │   ACQUIRE MOVING SPEED    │────── S110
    └─────────────┬─────────────┘
                  │
                  ▼
         ◇ ARE HANDOVERS ◇──────── S112          No
         ◇ TO BE INHIBITED? ◇──────────────────────┐
                  │                                 │
                 Yes                                │
                  ▼                                 │
    ┌───────────────────────────┐                  │
    │   TRANSMIT HANDOVER       │────── S114       │
    │   INHIBITION SIGNAL       │                  │
    └─────────────┬─────────────┘                  │
                  │◄──────────────────────────────┘
                  ▼
          ┌──────────────┐
          │     END      │
          └──────────────┘
```

## INTERNATIONAL SEARCH REPORT

| International application No. |
|---|
| PCT/JP2009/055788 |

### A. CLASSIFICATION OF SUBJECT MATTER
*H04W36/32(2009.01)i, H04W36/38(2009.01)i*

According to International Patent Classification (IPC) or to both national classification and IPC

### B. FIELDS SEARCHED

Minimum documentation searched (classification system followed by classification symbols)
*H04B7/24-7/26, H04W4/00-99/00*

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 10-051836 A (NEC Corp.),<br>20 February, 1998 (20.02.98),<br>Par. Nos. [0010], [0013], [0014], [0016], [0018]<br>(Family: none) | 1,2,4,5,8-10<br>6<br>3,7 |
| Y | WO 2001/033890 A1 (Fujitsu Ltd.),<br>10 May, 2001 (10.05.01),<br>Page 5, line 9 to page 6, line 9<br>& US 2002/0132628 A1   & EP 1225782 A1 | 6 |
| A | JP 2008-258855 A (NEC Corp.),<br>23 October, 2008 (23.10.08),<br>Full text<br>& US 2008/0247362 A1 | 1-10 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 May, 2009 (01.05.09) | Date of mailing of the international search report<br>19 May, 2009 (19.05.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/055788 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-259046 A (Matsushita Electric Industrial Co., Ltd.), 23 October, 2008 (23.10.08), Full text (Family: none) | 1-10 |
| A | JP 2008-270919 A (Matsushita Electric Industrial Co., Ltd.), 06 November, 2008 (06.11.08), Full text (Family: none) | 1-10 |

Form PCT/ISA/210 (continuation of second sheet) (April 2007)

**REFERENCES CITED IN THE DESCRIPTION**

**Patent documents cited in the description**

- JP 2005223753 A
- JP 2005311626 A